# EUROPEAN PATENT APPLICATION

(11) **EP 4 471 709 A1**
(43) Date of publication of application: **04.12.2024**
(21) Application number: 23176080.2
(22) Date of filing: 30.05.2023
(51) Int. Cl.: G06T 7/00, G06T 7/11, G06T 7/143

(54) **CHARACTERIZING LESION DELINEATIONS**

(71) Applicant: Koninklijke Philips N.V., 5656 AG Eindhoven (NL)
(72) Inventor: PAPACONSTADOPOULOS, Pavlos, Eindhoven (NL); HEIJMAN, Edwin, Eindhoven (NL)
(74) Representative: Philips Intellectual Property & Standards

(57) **Abstract**

The invention relates to a system (100) for characterizing delineations of tissue of interest. The system comprises one or more units (101, 102, 103) configured to provide a delineation (10) of assumed tissue of interest in an anatomical region, to provide a probability map (20) indicating probabilities for a presence of tissue of interest at points of the anatomical region, and to a) determine, for each of a plurality of probability levels of the probability map, a probability level-bounded region corresponding to a part of the anatomical region bounded by points at the respective probability level, and b) determine, based on the delineation and the probability level-bounded regions, a delineation characteristic (30) indicating, for each of the probability levels, a degree to which the respective probability level-bounded region covers the assumed tissue of interest. By use of such delineation characteristics for comparing delineations, a variability in delineations may be reduced.

## Description

### FIELD OF THE INVENTION

The invention relates to a system, a method and a computer program for characterizing delineations of tissue of interest, and to an apparatus for delineating tissue of interest.

### BACKGROUND OF THE INVENTION

In order to prepare for a treatment of a lesion, it is clinical practice to define a target region for the treatment based on a delineation of the lesion. Also other types of tissue of interest, such as organs at risk, which are to be protected during the treatment, may be delineated. For instance, a lesion and one or more organs at risk may be delineated by a clinician in a digital image of an anatomical region including the lesion and the organs at risk, wherein the digital image including the delineated lesion as a target region and the delineated organs at risk as regions to be protected can be used for planning and/or guiding a subsequent treatment of the lesion, such as for planning and/or controlling a radiation treatment or for planning and/or assisting a surgery, for instance. Digital images including delineations of lesions can also be useful for certain diagnostic procedures. The quality of the treatment or diagnosis then depends on the accuracy of the delineation. However, tissue of interest, such as tissue of a lesion or an organ at risk, can generally be delineated by a clinician, even if expert, only up to some uncertainty. This uncertainty is reflected by an observed variability in delineations arrived at by different clinicians for a given tissue structure of interest. Reducing this variability could therefore help in improving the quality of treatments and diagnoses.

### SUMMARY OF THE INVENTION

It is an object of the invention to allow for a reduced variability in delineations of tissue of interest among different clinicians.

In order to achieve the object, a system for characterizing delineations of tissue of interest is presented, wherein the system comprises i) a delineation providing unit configured to provide a delineation of assumed tissue of interest in an anatomical region, ii) a lesion probability map providing unit configured to provide a probability map indicating probabilities of a presence of tissue of interest at points of the anatomical region, and iii) a delineation characteristic determining unit configured to a) determine, for each of a plurality of probability levels of the probability map, a probability level-bounded region, the probability level-bounded region corresponding to a part of the anatomical region bounded by points at the respective probability level, and b) determine, based on the delineation of the assumed tissue of interest and the plurality of probability level-bounded regions, a delineation characteristic indicating a coverage degree for each of the probability levels, the coverage degree being a degree to which the probability level-bounded region determined for the respective probability level covers the assumed tissue of interest.

The delineation characteristic can be used to characterize a delineation. Hence, delineations by different clinicians can be compared to each other by determining delineation characteristics for each of the delineations and comparing the delineation characteristics with each other. The delineation characteristic can insofar be regarded as a tool for comparing delineations of tissue of interest. By doing so, i.e. by comparing their own delineations with those of others, clinicians can use the delineations of others as reference for their own delineations, which is expected to allow for a convergence of the delineation behavior of different clinicians and thus reduce a variability in delineations.

Individual regions of tissue of interest may also be considered anatomical structures. The delineation being characterized may hence also be viewed as a delineation of an anatomical structure. Lesions are anatomical structures of particular interest in clinical practice. The tissue of interest may hence particularly be tissue of one or more lesions. The delineation of the tissue of interest can in that case also be referred to as a lesion delineation, and the probability map as a lesion probability map. The delineation can also be a delineation of an organ at risk, i.e. an organ to be protected during treatments like radiation therapy, for instance. In clinical practice, organs at risk (OAR) are typically being segmented automatically. However, the segmentation may be reviewed by a clinician and, as a result of the review, the clinician may, for instance, correct a delineation resulting from the segmentation in a region where the organ lies in a planned beam path. Moreover, also delineations of other types of tissue can be useful in clinical practice. Nevertheless, in the following it will occasionally be assumed for exemplary purposes that the tissue of interest being delineated is that of a lesion, while it shall be understood that the delineation being characterized could also be a delineation of any other type of tissue of interest, particularly an organ at risk.

Comparing delineations of different tissue structures of interest, in particular from different patients, will hardly be able to reveal individual delineation characteristics of clinicians, since, due to features specific to the respective structure or patient, the delineations will naturally differ from each other. However, being only able to compare delineations of one and the same tissue structure of interest would require multiple clinicians examining the same structure, which is inefficient. Moreover, patient data may need to be shared among the clinicians, for which, given the sensitive nature of patient data, it would have to be made sure that the data are shared securely, i.e. without access for non-authorized third parties. For instance, the patient data could be shared via the cloud, but then access to the cloud would have to be limited to clinicians and other authorized parties. By comparing delineations of tissue of interest not themselves, but based on their respective delineation characteristics, therefore, the variability in delineations of tissue of interest among different clinicians can be reduced more efficiently and in a data-secure way.

As indicated above, lesion delineations are often a basis for a subsequent treatment of the respective lesion. Consequently, by reducing a variability in lesion delineations, also a variability in treatments of lesion can be reduced, such that a general quality of lesion treatments might be improved. Moreover, besides being used as a basis of lesion treatments, lesion delineations are also used for diagnoses and/or evaluating treatment results. For instance, lesion tissue remaining after a treatment of a patient may be delineated in images of tissue extracted by biopsy after a treatment in order to evaluate the treatment. A quality of the treatment can then be concluded with respect to predefined outcome parameters derived from the delineations of the remaining lesion tissue. A reduced variability of such delineations allows to assess lesion treatment qualities with an increased accuracy. Hence, reducing a variability in delineations of lesions, i.e. including remaining lesion tissue after a corresponding treatment, allows to improve both a treatment quality and its assessment, i.e. an accuracy with which treatment qualities can be assessed. Likewise, an accuracy of initial diagnoses based on lesion delineations can be improved.

For determining the delineation characteristic, the delineation characteristic determining unit just relies on the delineation provided by the delineation providing unit and the probability map provided by the probability map providing unit, i.e. not, for instance, on a representation of the lesion in a medical image of a patient. Hence, already this increases patient safety. Of course, also the delineation and the probability map can comprise some sensitive information, such as information about the patient's anatomy and a lesion status. However, by determining the probability level-bounded regions based on the probability map and determining, based on the delineation and the probability level-bounded regions, a delineation characteristic indicating coverage degrees for each of the probability levels associated with the boundaries of the probability level-bounded regions, the coverage degree being a degree to which the probability level-bounded region determined for the respective probability level covers the assumed lesion or other delineated tissue structure of interest, delineations can be compared with each other in a patient-agnostic space. The determination of the delineation characteristic by the delineation characteristic determining unit could also be regarded as a transformation of the delineation and the probability map into the patient-agnostic space.

The delineation providing unit can be configured to provide the delineation of the assumed lesion or other tissue of interest in the anatomical region in terms of data indicating points of a line or line segments corresponding to the delineation. The points can be given in terms of coordinates of a coordinate system for the anatomical region in which the lesion or tissue of interest is assumed to be present. For instance, the delineation could be provided in terms of image coordinates of a medical image of the anatomical region, wherein the delineation may be saved in this form together with the medical image. The delineation and the medical image may be stored together in a DICOM file, for instance, or in another form, wherein the form may preferably be standardized.

The terms "assumed lesion" and "assumed tissue of interest" are meant to indicate that the subregion of the anatomical region for which the delineation is provided can generally just be assumed to correspond to an actual lesion. Generally, the delineated subregion will also contain parts which do not correspond to tissue of a lesion or a respective structure of interest, and/or may only correspond to a part of an actually present lesion. In other words, the terms "assumed lesion" and "assumed tissue of interest" reflect the uncertainty involved in delineations of lesions and other tissue structures of interest. A delineation could be considered an assumption about a) a position and b) a shape or extent of a respective structure being delineated, i.e. a respective lesion or organ at risk, for instance.

The delineation providing unit may be a receiving unit configured to receive the delineation of the assumed lesion or other tissue of interest in the anatomical region, and to provide the received delineation. The delineation providing unit may also be a storage unit configured to store the delineation of the assumed lesion or other tissue of interest in the anatomical region, and to provide access to the stored delineation. The delineation providing unit can also be a determination unit configured to determine the delineation based on data received by it. In an example, the delineation, or data indicative of it based on which the delineation can be determined, could be provided based on a user input with respect to a graphical representation of the anatomical region, such as via an interaction by the user with a user interface showing the anatomical region in a medical image.

Also the probability map providing unit may be a receiving unit, a storage unit and/or a determination unit. Accordingly, the probability map providing unit may be configured to receive the probability map and provide the received probability map, it may be configured to store the probability map and provide the stored probability map for access and/or it may be configured to determine the probability map and provide the determined probability map.

The probability map may be a map of the anatomical region assigning points of the anatomical region to probabilities, wherein the probability assigned to a given point indicates a probability with which the point belongs to a lesion or a respective other tissue structure of interest. A point of an anatomical region "belonging to" a lesion or other tissue structure of interest may be understood such that tissue present at that point could be characterized as lesion tissue or, respectively, as the respective other type of tissue of interest. When representing the anatomical region in terms of a medical image, for instance, points belonging to a lesion can be distinguished from points not belonging to a lesion based on image values for the respective points. However, the probability map is preferably not an ordinary medical image. While ordinary medical images just image anatomical regions, the probability map comprises statistical information about delineations of lesions or respective other tissue structures of interest. This statistical information may be acquired based on a plurality of delineations in a plurality of medical images. The probability map may indicate the probabilities in terms of a color or gray scale of an image, or in terms of contours of a contour plot, for instance. However, many other ways of indicating the probabilities are possible.

Probability maps can serve as an assistance, or guidance, for clinicians in delineating lesions or other tissue of interest. For instance, a clinician could delineate a lesion in a medical image while taking a lesion probability map generated for the medical as a reference, wherein the probability map may be displayed side-by-side or as an overlay together with the image. Hence, to this extent, lesion probability maps can serve a function that is similar to the function that can be served by a delineation characteristic. However, delineation characteristics as referred to herein should not be misunderstood so as to include probability maps. A probability map could be regarded as indicating several possibilities, or suggestions, for a delineation of a lesion or respective other tissue structure, but it does not characterize the possibilities or suggestions, particularly not as defined for the delineation characteristics referred to herein. Also, when taking a probability map indicating probabilities for the presence of tissue of interest in a specific medical image as a reference for delineating the tissue of interest in the image, information from the image is already included in the reference, whereas a delineation characteristic taken as a reference would be generated based on other images, particularly other patients.

The probability map providing unit may be configured to provide the probability map by use of a machine learning model trained on delineations of lesions or the respective other tissue structures of interest carried out in a plurality of medical images. That is to say, the machine learning model may be trained using a plurality of training data pairs, wherein each of the training data pairs comprises training input data corresponding to a medical image of an anatomical region, and training output data corresponding to a delineation of a lesion or other tissue of interest in the anatomical region. The machine learning model may be trained such that, if provided with a medical image of an anatomical region as input, the model generates an output corresponding to a probability map for the anatomical region that indicates probabilities for a presence of tissue of interest at points of the anatomical region.

The machine learning model can particularly be a deep learning model. Instead of medical images, the model may also be trained, and subsequently function, based on image data underlying medical images, or based on other representations of anatomical regions. In a specific embodiment, the machine learning model could be realized as described in the article "Dropout as a Bayesian Approximation: Representing Model Uncertainty in Deep Learning" by Y. Gal and Z. Ghahramani, Proceedings of the 33rd International Conference on Machine Learning, PMLR, Vol. 48 (2016), which is herewith incorporated by reference in its entirety. However, in principle, any probability map indicating probabilities for a presence of a lesion or other tissue of interest at points of the anatomical region, i.e. also probability maps generated in any other way, may be used as a basis for determining the delineation characteristic. In particular, the probability map may also be provided without use of a machine learning model, but instead by otherwise relating, for instance, image values of a medical image to probabilities indicating likelihoods whether respective points in an imaged anatomical region correspond to tissue of interest such as, e.g., tissue of a lesion, or whether they do not.

In the probability map provided by the probability map providing unit, regions of equal or similar probability can be identified by the delineation characteristic determining unit. In two spatial dimensions, for instance, regions of similar probabilities in the probability map can be visualized in terms of a contour plot. In such a contour plot, the contours, which may also be referred to as iso-lines, would indicate lines of equal probabilities. Along these lines, the probability map would therefore indicate an identical probability for tissue of interest, such as a lesion, to be present. Typically, the shape of the contours may be expected to largely resemble that of the respective tissue structure of interest. However, besides the statistical nature of the probability map, it is of course also not known, for instance, which of the contours, if any, leads along the boundary of the tissue structure of interest.

While in two spatial dimensions, the probability levels in the probability map may form closed loops, in three spatial dimensions, they may form closed surfaces, which may also be referred to as iso-surfaces of the probability map. Irrespective of whether the anatomical region is represented in two or three spatial dimensions, the delineation characteristic determining unit is configured to determine, for each of the identified probability levels, a probability level-bounded region, corresponding to a part of the anatomical region bounded by points at the respective probability level. In other words, for each of the iso-surfaces in the probability map (or the iso-lines, in two spatial dimension), an interior volume is determined, i.e. a subvolume of the anatomical region encapsulated by the respective iso-surface (in two spatial dimensions, an area or subarea bounded by the respective iso-line).

In practice, it may be preferred that the probability levels do not correspond to exactly identical probabilities, but instead to probability intervals. These intervals may be relatively small, in which case the probabilities contained therein may still be considered similar or even identical for all practical purposes. However, it may also be preferred that the intervals are relatively large, such that the regions of the probability map corresponding to the probability levels receive a significant width. In that case, the iso-lines and iso-surfaces are no longer true iso-lines and iso-surfaces, but can in principle still be thought of in the same way. In particular, the probability level-bounded regions can still be determined by the delineation characteristic determining unit in essentially the same way. For instance, for determining a boundary of a probability level-bounded region corresponding to a probability level having a nonzero width, i.e. corresponding to a probability interval, any curve, or surface, in the probability map lying inside the probability level, i.e. in this case interval, may be selected. The probability level-bounded region may then be determined to be the subarea (or subvolume, respectively) of the anatomical region encapsulated by that curve (or surface, respectively).

Since the probability map may comprise regions of constant probability, i.e. regions in which the probability for the presence of a lesion or the respective other tissue of interest does not change, even true iso-probability lines or surfaces may receive a nonzero width. For determining a boundary of a probability level-bounded region corresponding to a probability level at which regions of constant probability exist in the probability map, the delineation characteristic determination unit may therefore be configured to select any curve, or surface, in the probability map lying inside the probability level, i.e. any of the possible curves, or surfaces, crossing the region of constant probability. The probability level-bounded region may then be determined to be the subarea (or subvolume, respectively) of the anatomical region encapsulated by that curve (or surface, respectively). Hence, regions of constant probability may be handled analogously to interval-like probability levels in determining the probability level-bounded regions.

As for the probability levels, also for the delineation of the assumed lesion or other tissue of interest an "interior" region may be determined. This region could also be considered the delineation-bounded region, or simply the assumed lesion or other tissue of interest. For each of the probability level-bounded regions, then, the delineation characteristic determining unit may be configured to determine a degree to which the probability level-bounded region covers the assumed tissue of interest, i.e. the delineation-bounded region. By repeating this for several or all of the plurality of probability level-bounded regions, a plurality of respective degrees, i.e. coverage degrees, may be determined by the delineation characteristic determining unit, wherein each coverage degree is associated with a respective probability level, i.e. the probability level associated with the respective probability level-bounded region. The delineation of the assumed tissue of interest in the anatomical region can then be characterized by relating the several coverage degrees to the respective probability levels.

Depending on the probability map, i.e. effectively depending on the anatomical region, possibly a disease state, and the manner in which the probability map is determined, several probability level-bounded regions may exist for one and the same probability level. At lower probability levels, additional, undesired probability level-bounded regions may correspond to medically non-relevant anatomical structures. At higher probability levels, additional probability level-bounded regions may correspond to additional structures with tissue of interest. The further structures of interest may be subject to further delineations, wherein it may be desired that corresponding separate delineation characteristics be determined for the further delineations of the further structures with tissue of interest. The delineation characteristic determining unit may therefore be configured to determine a single probability level-bounded region for each of the probability levels to be considered for determining the delineation characteristic based on a probability level-bounded region selection at each of the probability levels. At a given probability level at which several probability level-bounded regions exist in the probability map, the selection may be such that a probability level-bounded region at least partially covering the assumed tissue region of interest, i.e. the assumed lesion region, for instance, is singled out. In other words, probability level-bounded regions not covering the assumed tissue region of interest, i.e. not even partially covering the assumed tissue region of interest, may be discarded by the delineation characteristic determination unit.

Preferentially, the delineation characteristic determining unit is configured to a) determine an assumed lesion region based on the provided delineation of the assumed lesion, the assumed lesion region being a part of the anatomical region corresponding to the assumed lesion, and to b) determine the delineation characteristic based on overlaps between the assumed lesion region and the plurality of probability level-bounded regions. Hence, in this case, for each of the probability levels of the probability map, an overlap between the probability level-bounded region determined for the probability level and the assumed lesion region is determined, wherein the delineation of the assumed lesion is characterized in terms of the overlaps determined for the plurality of probability levels. In this way, very accurate coverage degrees can be determined. In a variant, the assumed lesion region is an assumed region of other tissue of interest, wherein, however, the delineation characteristic is determined as if the tissue were tissue of an assumed lesion.

The assumed tissue region of interest may be determined based on the provided delineation of the assumed tissue of interest and a predefined or selectable geometric model. It the tissue of interest is that of a lesion, the model may be a model of the assumed lesion. For instance, an incomplete delineation of the assumed lesion may be completed such that the completed delineation corresponds to a boundary of the predefined or selectable model of the lesion. This may also be viewed as a lesion model-based completion of the delineation in terms of an interpolation. Meanwhile, in principle, an interpolation-based completion of lesion delineations or delineations of other tissue structures such as organs may also be carried out without reference to a particular model of the respective tissue structure, such as, for instance, by simply connecting open points of a delineation in a shortest possible way.

Typically, a clinician would delineate an assumed lesion or respective other tissue interest in slice images of a three-dimensional medical image by providing complete, closed contours of the assumed tissue of interest in the slice images. The slice images may correspond to transverse, coronal and/or sagittal sections through the anatomical region. However, in order to arrive at a complete set of boundary points for the assumed tissue of interest, i.e. a closed two-dimensional surface, it may be necessary to interpolate between the contours provided in the individual slice images. This may be done by purely mathematical and/or geometric interpolation between the contours in the respective slices, and/or a medical model of the assumed lesion or other tissue structure of interest. A simple model shape of an assumed lesion may be, for instance, a sphere or an ellipsoid. Moreover, an interpolation between the contours in the respective slices may be carried out using a local edge detection algorithm and/or based on atlas information indicative of organs surrounding the lesion.

In fact, the delineation characteristic determining unit may also be configured to determine the delineation characteristic based on a section of the delineation and the plurality of probability level-bounded regions. In other words, a complete delineation is indeed not necessary for determining the delineation characteristic. The section of the delineation may particularly refer to a line section. For determining the delineation characteristic based on a section of a delineation in a slice image, i.e. a line section, the delineation characteristic determining unit may be configured to use image information from one or more slice images that are perpendicular to the slice image in which the section of the delineation has been provided. In these perpendicular directions, complete delineations may have been provided, or completion of the delineation based on a model of the assumed tissue region of interest may be carried out more accurately in the perpendicular directions, such as due to an improved view onto the local anatomy, for instance. On the other hand, it may be sufficient to carry out the completion of the delineation in the one or more perpendicular directions, wherein the delineation characteristic may then be determined based on a completed delineation in the slice images perpendicular to the one in which the delineation section was provided. Thus, an initial, incomplete delineation line section in a first view may just be taken as a basis for determining a complete delineation line in a second view perpendicular to the first view, wherein the complete delineation line in the second view may be taken as a basis for determining the delineation characteristic.

The overlaps between the probability level-bounded regions and the assumed tissue region of interest may refer to overlap regions in the anatomical region. In particular, the overlaps may refer to (sub-)volumes, or (sub-)regions, of the anatomical region in which the probability level-bounded regions overlap with the assumed tissue region of interest, i.e. which belong to both the assumed tissue region of interest and the respective probability level-bounded region. Preferentially, the volumes of the overlap regions are relative volumes, particularly measured with respect to a total volume of the assumed tissue region of interest. In this way, the delineation characteristic is particularly suitable to be used for comparing delineations of differently sized lesions, organs or other tissue structures with each other.

Since both the delineation and the probability map refer to the anatomical region, the delineation and the probability map could be considered registered with each other, namely via the anatomical region. Preferentially, the delineation characteristic determining unit is configured to determine the assumed tissue region of interest, the probability level-bounded regions and the overlaps therebetween in the probability map. Hence, the registration between the delineation and the probability map may be used to map the delineation and/or the assumed tissue region of interest determined based thereon to the probability map, and to determine the overlaps in the probability map. In this way, only the delineation and the probability map are needed as input data for determining the overlaps and hence the coverage degrees. In particular, no sensitive patient image data is needed to determine the delineation characteristic.

Typically, the delineation of the assumed tissue of interest and the probability map would be provided based on a digital representation of the anatomical region. It may be preferred that the digital representation is the same for the delineation and the probability map, i.e. that the delineation of the assumed tissue of interest and the probability map are provided based on a same digital representation of the anatomical region. The one or more digital representations of the anatomical region based on which the delineation of the assumed tissue of interest and the probability map are provided may particularly refer to a respective medical image of the anatomical region. However, the anatomical region may also be represented differently. For instance, also the image data underlying a medical image may be regarded as a digital representation of what is imaged. By providing the delineation of the assumed tissue of interest and the probability map based on a same digital representation of the anatomical region, errors that may occur when mapping one digital representation to the other can be avoided, thereby allowing for a more accurate determination of the coverage degrees and thus a more accurate delineation characteristic.

In case the delineation of the assumed tissue of interest and the probability map are provided based on a digital representation of the anatomical region, particularly a same digital representation of the anatomical region, the delineation characteristic determining unit may be configured to determine the assumed tissue region of interest, the probability level-bounded regions and the overlaps therebetween in the digital representation of the anatomical region. In particular, the delineation characteristic determining unit may be configured to determine the overlaps in the digital representation and not the probability map. Determining the overlaps in the digital representation of the anatomical region allows for a representation of the overlaps with respect to the anatomical region. For instance, the overlaps may be highlighted in a medical image of the anatomical region based on which the delineation of the assumed tissue of interest and the probability map have been provided.

The digital representation of the anatomical region preferably corresponds to a medical image of the anatomical region. Accordingly, the machine learning model used for providing the probability map may then have been trained to determine probability maps indicating probabilities for a presence of a lesion or respective other tissue of interest at points of the anatomical region from medical images. By using medical images as digital representations of anatomical regions for determining delineation characteristics as described herein, already known machine learning models like the one referenced further above can be used for determining the probability maps instead of, for instance, having to assemble new training data and train a new machine learning model based thereon. Moreover, there already exist large patient databases comprising medical images as digital representations of the respectively relevant anatomical regions, such that a large reference database for determining delineation characteristics becomes readily accessible if using medical images as digital representations. Furthermore, clinicians are typically trained to delineate tissue structures like lesions in medical images. Hence, delineation characteristics can be established without having to modify the manner lesions and other tissue structures of interest are delineated in clinical practice.

In an example, the delineation characteristic could refer to a histogram of the coverage degrees for the plurality of probability levels of the probability map. The delineation characteristic may in that case be referred to as a probability volume histogram (PVH). A histogram may generally be understood as a representation of a numerical distribution of data. Typically, the data is numerically split into predefined intervals, wherein then the number of data points in each interval may be counted and subsequently plotted in the histogram. Applied to the present case, the "intervals" are replaced by the probability level-bounded regions, wherein determining a delineation characteristic corresponding to a histogram may be understood as "counting" a number of volume elements of the assumed tissue region of interest being inside the respective probability level-bounded region, wherein this number is preferably normalized with respect to a total number of volume elements in the assumed tissue region of interest.

While ordinary histograms are often generated based on non-overlapping numerical intervals, this will typically not be the case for the probability bounded regions. Hence, when determining a delineation characteristic in the form of a histogram, this histogram will insofar differ from many ordinary histograms. For a spherically shaped lesion, for instance, the lesion probability map will typically indicate a probability distribution that peaks in a central or bulk region of the lesion and decreases from there towards outer regions of the lesion in a largely spherically symmetric way. Hence, probability level-bounded regions corresponding to relatively low probability levels can generally be expected to enclose probability level-bounded regions corresponding to relatively high probabilities. Despite these differences with respect to many ordinary histograms, characterizing delineations in terms of histograms can allow for a relatively intuitive delineation feedback to clinicians. It should be noted that the "intervals" may, in the case of characterizing delineations, also be distributed quasi-continuously, i.e. have quasi-vanishing widths. In other words, the probability levels may effectively be chosen to be distributed continuously. Accordingly, the histogram corresponding to the delineation characteristic may be determined such that it assumes the form of a continuous graph or curve.

As already indicated above, the probability map providing unit may be configured to provide the probability map based on a medical image of the anatomical region by use of a machine learning model that has been trained on a training data set of medical images and delineations of tissue of interest therein, to output a probability map for a medical image received as an input, the probability map indicating probabilities for a presence of tissue of interest at points of the anatomical region. It may be particularly preferred in that case that also the delineation of the assumed tissue of interest is provided based on a medical image of the anatomical region, particularly the same medical image based on which also the probability map is provided. For instance, if a clinician delineates a region in a medical image that he/she considers to correspond to a tumor, this delineation may be provided by the delineation providing unit, wherein the medical image with respect to which the clinician has delineated the tumor is provided as an input to the trained machine learning model such that the output provided by the machine learning model corresponds to the probability map provided by the probability map providing unit.

The system comprising the delineation providing unit, the probability map providing unit and the delineation characteristic determining unit may further comprise a storage unit configured to store the determined delineation characteristic as a reference delineation characteristic in relation to which further delineation characteristics are to be evaluated. For instance, a delineation provided by a first clinician for an assumed tissue structure of interest, particularly a lesion or organ at risk, in a medical image of a first patient may be used for storing a corresponding first delineation characteristic in the storage unit, wherein the first delineation characteristic may be retrieved from the storage unit and displayed to a second clinician as a guidance while delineating an assumed tissue structure of interest, particularly a lesion or organ at risk, in a medical image of a second patient. The guidance may be realized, for instance, by determining a second delineation characteristic corresponding to the delineation provided by the second clinician for the second patient and displaying the second delineation characteristic together with the first delineation characteristic.

Instead of comparing delineation characteristics provided by different clinicians for different patients, it may also be useful to compare delineation characteristics provided by one and the same clinician for one and the same or different patients. For instance, the delineation characteristics may be determined for delineations provided by a same clinician based on medical images corresponding to different imaging modalities.

Moreover, instead of only comparing a single current delineation characteristic with a single stored delineation characteristic, a current delineation characteristic may also be compared with a plurality of stored delineation characteristics. For instance, the comparison may be made with respect to a statistical representative for a plurality of stored delineation characteristics. The reference delineation characteristic to which a current delineation characteristic could be compared may thus be, for instance, an average delineation characteristic determined by averaging the plurality of stored delineation characteristics. This may be particularly useful in achieving a consensus among a plurality of clinicians regarding their delineation behaviors. For instance, if delineations of lesions were provided by clinicians on a regular basis such that the delineation characteristics determined for the delineations match an average delineation characteristic determined by averaging delineation characteristics determined based on lesion delineations of a plurality of other clinicians and a plurality of patients, it would be reasonable to assume that the delineation behavior regarding lesions among the plurality of clinicians will converge relatively soon.

The system presented herein may further comprise an evaluation unit configured to evaluate the determined delineation characteristic in relation to one or more reference delineation characteristics. This may assist a clinician in his or her assessment of how a delineation provided by him or her relates to delineations provided by other clinicians, or by him or herself in the past, for instance. In particular, the evaluation unit may be configured to assess, based on the determined delineation characteristic and the reference delineation characteristic, whether the delineation being assessed is relatively narrow or relatively broad as compared to the reference delineation characteristic. This could also be viewed such that the evaluation is configured to determine whether a currently provided delineation corresponds to an "under-contouring" or an "over-contouring". A narrow or "under-contouring" delineation may be understood as delineating a region that is smaller than an actual region corresponding to the respective tissue structure to be delineated. Conversely, a relatively broad or "over-contouring" delineation can be understood as a delineation of a region that is larger than the actual region corresponding to the tissue structure to be delineated.

Due to the above-indicated circumstance that probability level-bounded regions corresponding to relatively low probability levels can generally be expected to enclose probability level-bounded regions corresponding to relatively high probabilities, a first delineation characteristic indicating higher coverage degrees than a second delineation characteristic, for instance, will typically be broad or "under-contouring" relative to the second delineation characteristic, with the second delineation characteristic, vice versa, being narrow or "over-contouring" relative to the first delineation characteristic. For instance, a relatively narrow or "under-contouring" delineation of a lesion could also be thought of as corresponding to a relatively specific but insensitive (and thus rather false negative) assumption about the shape or extent of the lesion, while a relatively broad or "over-contouring" delineation of a lesion could also be thought of as corresponding to a relatively sensitive but unspecific (and thus rather false positive) assumption about the shape or extent of the lesion.

In particular, the evaluation unit may be configured to determine that a) the provided delineation of the assumed tissue of interest is relatively narrow if the determined delineation characteristic indicates a smaller decrease in coverage degree with increasing probability levels than the reference delineation characteristic, and that b) the provided delineation of the assumed tissue of interest is relatively broad if the determined delineation characteristic indicates a higher decrease in coverage degree with increasing probability levels than the reference delineation characteristic. The determination of whether the respective delineation is relatively narrow or relatively broad may be made by the evaluation unit with regard to respective decreases in coverage degree throughout the delineation characteristics or only with regard to respective decreases in coverage degree at one or more probability levels, for instance.

The above-mentioned object may particularly be met by an apparatus for delineating lesions or other tissue of interest, wherein the apparatus comprises a) a display device configured to display an anatomical region, b) a delineation device configured to delineate an assumed lesion or assumed tissue of interest, respectively, in the displayed anatomical region, and c) the system for delineating lesions described herein, wherein the delineation characteristic providing unit is configured to determine the delineation characteristic for the delineation in the displayed anatomical region, and wherein the display device is further configured to display the determined delineation characteristic together with a reference delineation characteristic.

Moreover, the above-mentioned object may be met by a method for characterizing lesion delineations and/or delineations of other tissue of interest, wherein the method includes a) a step of providing a delineation of assumed tissue of interest, particularly an assumed lesion, in an anatomical region, b) a step of providing a probability map indicating probabilities for a presence of tissue interest, particularly a lesion, at points of the anatomical region, and c) a step of determining i) for each of a plurality of probability levels of the lesion probability map a probability level-bounded region, the probability level-bounded region corresponding to a part of the anatomical region bounded by points at the respective probability level, and ii) based on the delineation of the assumed tissue of interest, i.e. the assumed lesion, for instance, and the plurality of probability level-bounded regions, a delineation characteristic indicating a coverage degree for each of the probability levels, the coverage degree being a degree to which the probability level-bounded region determined for the respective probability level covers the assumed tissue of interest, i.e. particularly the assumed lesion.

The above-mentioned object may also be met by a computer program for characterizing lesion delineations and/or delineations of other tissue of interest, wherein the program comprises instructions causing the system described herein, or in fact any computer, to carry out the method indicated above.

In fact, the determined delineation characteristic in itself may be regarded as a new kind of data structure allowing to meet the above-mentioned object. In particular, a database of delineation characteristics of the kind described herein may be regarded, i.e. presented herewith, as such. A delineation characteristic of the kind described herein could be defined as a data structure indicating a coverage degree for each of a plurality of probability levels, the coverage degree being a degree to which a respective probability level-bounded region determined for the respective probability level covers assumed tissue of interest, wherein a) the probability levels are probability levels of a probability map indicating probabilities for a presence of a tissue of interest at points of an anatomical region in which the tissue of interest is assumed to be present, b) the probability level-bounded regions correspond to respective parts of the anatomical region bounded by points at the respective probability level, and c) the assumed tissue of interest refer to a region of, i.e. a part of, the anatomical region delineated by a provided delineation.

As mentioned further above, machine learning may be employed as a particular option for providing a probability map as referred to herein. Therefore, the invention insofar also relates to a training system, a training method and a computer program for training a machine learning model.

The training system may comprise a training data providing unit configured to provide training data, a machine learning model providing unit configured to provide a machine learning model to be trained, and a training unit configured to train the machine learning model based on the training data. The training data may comprise a plurality of training data pairs, wherein each of the training data pairs comprises training input data corresponding to a representation of an anatomical region, at least some of the represented anatomical regions comprising tissue of interest, i.e. a lesion or a particular organ, for instance. The anatomical regions may at least in part also refer to a same anatomical region, but belong to different patients. Furthermore, the training data pairs may comprise training output data corresponding to one or more delineations of one or more structures comprising tissue of interest such as lesions in the respective anatomical region. The machine learning model may be trained by the training unit such that, if provided with a representation of an anatomical region as input, the model generates an output corresponding to a probability map for the anatomical region, the probability map indicating probabilities for a presence of tissue of interest at points of the anatomical region.

The training method may include the steps of providing the training data, providing the machine learning model to be trained and training the model using the training data. A computer program for training the machine learning model may comprise instruction which, when executed by a computer, cause the training system, or in fact any computer, to carry out the steps of the training method.

It shall be understood that the system of claim 1, the apparatus of claim 13, the method of claim 14, and the computer program of claim 15, as well as the training system, the training method and the corresponding computer program, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily a system for characterizing lesion delineations,
Fig. 2 shows schematically and exemplarily a lesion probability map,
Fig. 3A shows schematically and exemplarily a lesion probability map including a lesion delineation,
Fig. 3B shows schematically and exemplarily a delineation characteristic,
Fig. 4A shows schematically and exemplarily a lesion probability map including two lesion delineations of a same lesion,
Fig. 4B shows schematically and exemplarily a delineation characteristic for each of the lesion delineations shown in Fig. 4A,
Fig. 5A shows schematically and exemplarily a lesion probability map including two further lesion delineations of a same lesion,
Fig. 5B shows schematically and exemplarily a delineation characteristic for each of the lesion delineations shown in Fig. 5B,
Fig. 6 shows schematically and exemplarily a use of a database of delineation characteristics,
Fig. 7 shows schematically and exemplarily an apparatus for delineating lesions, and
Fig. 8 shows schematically and exemplarily a method for characterizing lesion delineations.

### DETAILED DESCRIPTION OF EMBODIMENTS

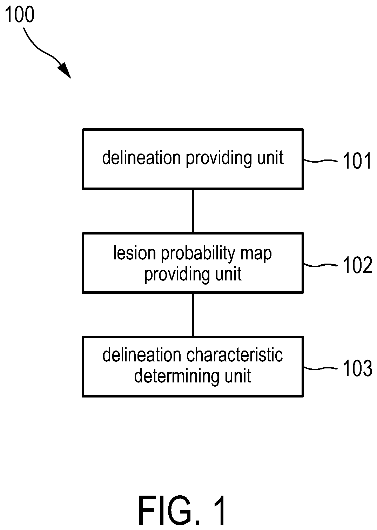

Fig. 1 shows schematically and exemplarily a system 100 for characterizing lesion delineations. The system 100 comprises a delineation providing unit 101, a lesion probability map providing unit 102 and a delineation characteristic determining unit 103. The delineation providing unit 101 is configured to provide a delineation of an assumed lesion in an anatomical region, and the lesion probability map providing unit 102 is configured to provide a lesion probability map that indicates probabilities for a presence of a lesion at points of the anatomical region. The anatomical region may be a region in a patient's body that has been imaged using some medical imaging modality due to a suspicion that a tumor is present in this region. The imaging modality could refer to computed tomography (CT), magnetic resonance imaging (MRI), or positron emission tomography (PET), but is not limited thereto. A clinician may then have delineated a subregion in the image which he/she assumes to correspond to the tumor, wherein this delineation may be provided by the delineation providing unit. Moreover, the lesion probability map provided by the lesion probability map providing unit 102 may indicate, for each of a plurality of points of the imaged anatomical region, particularly substantially all points of the imaged anatomical region, a respective probability for the point actually corresponding to tissue of a tumor. While the provided delineation could also be regarded as a segmentation of the tumor, i.e. a binary indication of a location and extent and/or shape of the tumor, the lesion probability map could be regarded as a continuous or quasi-continuous statistical indication of the location and the extent and/or shape of the tumor.

The delineation characteristic determining unit 103 is configured to determine, for each of a plurality of probability levels of the lesion probability map, a probability level-bounded region corresponding to a part of the anatomical region that is bounded by points at the respective probability level. Hence, the delineation characteristic determining unit 103 may be configured to identify a plurality of probability levels in the lesion probability map and determine, as a respective probability level-bounded region, an anatomical subregion for each of the probability levels, wherein the anatomical subregions, i.e. the probability level-bounded regions, are defined such that their respective boundary lies at the respective probability level. In this way, several regions are being identified whose boundaries correspond to respective probability levels of the lesion probability map. The identified regions are therefore referred to herein as being probability level-bounded.

Since the probability level-bounded regions are each bounded by a respective probability level, they could be viewed as corresponding to this, i.e. their respective, probability level. However, since, as already described in more detail further above, they actually refer to the volume or area bounded by the respective probability level, i.e. to the interior of the surface or line lying at the respective probability level, the probability level-bounded regions can, more accurately, also be viewed as corresponding to a range of probabilities, i.e. the range of probabilities that is indicated by the lesion probability map to lie inside the boundary of the respective probability level-bounded region. In fact, a probability level-bounded regions for a given probability level may also be defined to be that anatomical sub-region for which the lesion probability map indicates probabilities that are at, or at or above, the given probability level. For instance, a first probability level-bounded region may be defined as covering all image voxels that are assigned a lesion probability of more than 10%, a second probability level-bounded region may be defined as covering all image voxels that are assigned a lesion probability of more than 20%, et cetera. The first probability level-bounded region would then correspond to the range of probabilities above 10%, the second probability level-bounded region to the range of probabilities above 20%, et cetera. Hence, the regions in the lesion probability map corresponding to the probability level-bounded regions cover the lesion probability map cumulatively. As a consequence, as also already indicated further above, a probability level-bounded region bounded by a first probability level can fully contain a probability level-bounded region bounded by a second probability level, if the second probability level is higher than the first probability level. This would be the case if the first probability were 10% and the second probability were 20%, for instance.

The delineation characteristic determining unit 103 is further configured to determine, based on the delineation of the assumed lesion and the plurality of probability level-bounded regions, a delineation characteristic that indicates a coverage degree for each of the probability levels, wherein the coverage degree is a degree to which the probability level-bounded region determined for the respective probability level covers the assumed lesion. For instance, a probability level-bounded region which fully contains the region corresponding to the assumed lesion as a subregion could be regarded as fully covering the assumed lesion such that a coverage degree of 1, i.e. 100%, could be associated to the probability level-bounded region. If, on the other hand, a probability level-bounded region contains only parts of the region corresponding to the assumed lesion as a subregion, the probability level-bounded region could be regarded as only partially covering the assumed lesion such that a coverage degree below 1, i.e. below 100%, could be associated to the probability level-bounded region. A probability level-bounded region completely contained in the region corresponding to an assumed lesion as a subregion could be regarded as covering the assumed lesion to the extent of its own volume, i.e. the volume of the probability level-bounded region itself. Consequently, a coverage degree associated to the probability level-bounded region would then typically decrease in the same way as the volume of the probability level-bounded region. Notably, the coverage degrees indicated by the delineation characteristic could also be regarded as degrees to which the assumed lesion is covered by the respective probability level-bounded regions. In this way, the function of the delineation characteristic as a means for characterizing the delineation might be emphasized.

It is expected that delineation characteristics as determined by the system 100 allow for a decreased variability in lesion delineations among different clinicians as well as in lesion delineations by a same clinician at different points in time, such as for different lesions and/or under different clinical guidelines. In this way, eventually an improved medical treatment of lesions may be achieved, since the treatment may be targeted and/or evaluated more precisely. Particularly beneficial use may be made of the system 100 in the field of oncology, in which case the lesion may specifically be a tumor.

Prior to oncology treatments, a patient is typically being scanned by a medical image modality such as a CT, MRI or PET system in order to identify the location and extension of the respective malignancy, i.e. the suspected tumor. A radiologist or radiation oncologist will then typically delineate a target area in one or more medical images arising from the scan, wherein the target area is to be treated subsequently by, for instance, radiation or ablation. The act of delineating the target area could also be referred to as a contouring thereof. Typically, volumetric medical images are acquired in slices, in which case the target area is usually delineated in each of the slices, i.e. in corresponding two-dimensional images. A complete delineation, i.e. a two-dimensional bounding sub-surface in the three-dimensional imaged anatomical region, which may also be considered a shell, may then be determined based on the delineations in the slice images, which may be provided by the radiologist or radiation oncologist in terms of closed lines, i.e. loops. The delineated target area, which is assumed by the delineating person to correspond to the tumor region, and which is typically displayed on a medical image modality, is also referred to as the gross tumor volume (GTV).

It has been found that one of the largest uncertainties during GTV delineation is the interobserver variability. Interobserver variability may be referred to as the uncertainty associated with the different delineations that clinical experts generate on a given image scan for identifying the tumor location and extension. This uncertainty can be considered to partially stem from the fact that there is no image modality that perfectly differentiates between lesion tissue and other tissue, particularly between healthy tissue and tissue of a malignant tumor. But, the uncertainty will also be due to the personal bias and opinion each clinician has. The latter effect on the uncertainty during GTV delineation can be revealed if multiple clinical experts attempt to delineate the GTV on a same patient blindly to each other. In the literature, multiple such blind studies for various tumor sites have been performed and exhibited a low interobserver consensus. Such inconsistencies in target delineations are so significant that they can be considered as one of the largest sources of errors during the whole treatment care path. Since uncertainties introduced in the step of lesion delineation will propagate into subsequent steps of the treatment workflow, they can have a serious negative impact on the patient treatment and hence be a significant risk for patients.

One approach to decrease the interobserver variability in lesion delineations would be to allow clinicians to present and compare their delineations of a same lesion, i.e. substantially their individual expert opinions on the same patient. In this regard, setting up a contouring, or delineation, knowledge information hub could be considered. The knowledge information hub could combine the collective knowledge of multiple physicians from multiple clinical sites. For a given new patient in a clinical site, images could be uploaded to a centralized system, wherein multiple physicians and/or, in fact, models could generate respective solutions, i.e. lesion delineations, based on their respective, individual, prior knowledge. A consensus delineation or contour could then be created based on the several solutions and thereafter returned to the sender. The consensus could refer, for instance, to an intersection of all delineated regions, or GTVs, i.e. to a region that is contained in all delineated regions. Delineations determined based on such a consensus can, however, be relatively sensitive to outliers, i.e. exceptional individual delineations, and have been observed to often lead to relatively small, unrealistic structures being delineated according to the consensus. For example, only one physician contouring a GTV that does not overlap with the rest of the considered group of contours, i.e. delineations, can already result in a zero volume structure. Also, the limitation to comparisons among delineations of a same lesion or a same patient is relatively resource expensive. In practice, multiple physicians would effectively have to delineate lesions of new patients on a continuous basis. Besides, by comparing only delineations of a same lesion with each other, the insights that can be gained about individual delineation behaviors are limited, since delineations of a same lesion, i.e. associated with a same patient, can be expected to exhibit a relatively strong cross-dependency. Furthermore, uploading medical images to a centralized system such that they can be accessed by multiple clinicians to provide their respective individual lesion delineations raises security concerns. Sharing patient data such as medical images has been historically difficult. Modern data protection guidelines, such as the General Data Protection Rules (GDPR), have made patient data sharing even more challenging.

Hence, while a variability in lesion delineations may already be reduced to some extent by a) sharing lesion image data, b) having reference lesion delineations be provided based on the image data and c) providing a "consensus" lesion delineation delineating a region corresponding to an intersection of the regions delineated by the reference delineations, it would be desirable to reduce the variability in lesion delineations in a more efficient and more secure way. While still relying on the assumption that physicians who can easily see and compare their work with their colleagues will likely reach faster to a consensus and eventually reduce the interobserver variability in lesion delineations, the system 100 does not rely on a comparison or exchange of patient images. For example, it is not needed that two physicians are delineating a lesion on a same patient image and compare their respective delineations directly to each other. Instead, the delineation characteristics can be used for comparing the respective lesion delineations. Determining a delineation characteristic for a given lesion delineation could be considered as a mapping of the lesion delineation to a new, patient-agnostic data space. The mapping is effected by use of the respective lesion probability map. In the new data space, delineations can be compared more efficiently and securely.

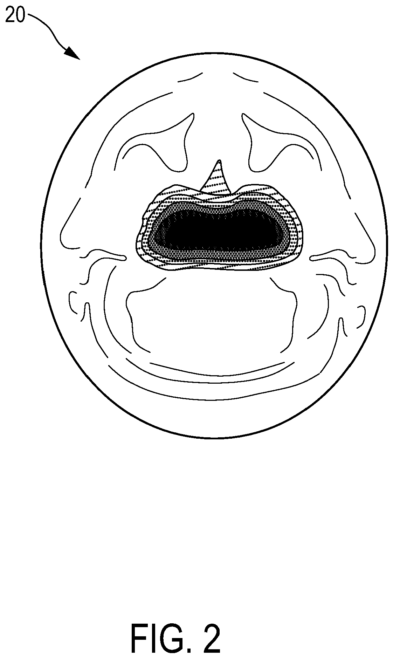

Fig. 2 shows schematically and exemplarily a lesion probability map 20. In this case, the lesion is a tumor corresponding to nasopharynx cancer, and the lesion probability map 20 includes, in a central part of it, five probability level-bounded regions, while, in an outer part surrounding the five probability level-bounded regions, anatomical contours of the nasopharynx region are indicated. The five probability level-bounded regions of the lesion probability map 20 lie such that each of them is completely contained in, i.e. covered by, the one or more of them corresponding to a lower probability level. This is indicated in Fig. 2 by an increasingly dark shading of the probability level-bounded regions with increasing probability level.

Probability maps like the lesion probability map 20 can be provided based on a medical image of the respective underlying anatomical region, such as a patient's nasopharynx region in this case, by use of a machine learning model that has been trained on a training data set of medical images and delineations of lesions therein, to output lesion probability maps like the map 20 shown in Fig. 2 given a medical image like an image of a nasopharynx region as an input. Exemplary machine learning models suitable for generating lesion probability maps like the map 20 shown in Fig. 2 use probabilistic deep learning techniques such as the Monte Carlo dropper technique. This is further described in the article "Dropout as a Bayesian Approximation: Representing Model Uncertainty in Deep Learning" by Y. Gal and Z. Ghahramani, Proceedings of the 33rd International Conference on Machine Learning, PMLR, Vol. 48 (2016), which was already referenced further above. By training the respective machine learning model using training data including delineations of a plurality of different observers, the lesion probability maps generated by the trained machine learning model can be expected to at least partially reflect the interobserver variability in the lesion delineations used as training data. The lesion probability map 20 in Fig. 2, for instance, indicates the presence of a nasopharynx cancer in a central part of the nasopharynx region, but without indicating a definite boundary between cancerous and noncancerous tissue. Instead, the probabilities indicated by the lesion probability map 20 essentially decrease from an interior of the cancerous region towards outer parts of the cancerous region, and further on towards parts outside of the cancerous region, in a substantially continuous way. The position and shape of the boundaries of the probability level-bounded regions visible in Fig. 2 just arise from the probability levels that have in this case been chosen to be illustrated, wherein this choice, which could also be regarded as a thresholding of the probabilities indicated by the probability map, is actually arbitrary. If there were no interobserver variability in the lesion delineations used as training data for the machine learning model employed for generating the lesion probability map 20, the boundaries between the probability level-bounded regions in the lesion probability map 20 could have been expected to be yet closer together, thereby indicating a yet more "clear-cut" distinction between likely cancerous tissue in the center and likely non-cancerous tissue surrounding the cancerous tissue.

Regarding the appearance of the lesion probability map 20 shown in Fig. 2 as well as the appearance of the subsequently discussed lesion probability maps 21, 22, 23, 24, and concerning their interpretation in terms of probabilities for a presence of a lesion at respective points of an anatomical region, it should be borne in mind that the respective figures show black-and-white versions of the respective actual lesion probability maps, the actual lesion probability maps having been provided in terms of colored heat maps with color values ranging from green over yellow to red and dark red, wherein green areas in the lesion probability map indicate relatively low probabilities for the presence of a tumor and red, particularly dark red, areas in the lesion probability map indicating relatively high probabilities for the presence of a tumor. In their black-and-white versions, the illustrated lesion probability maps 20, 21, 22, 23, 24 indicate increasing probabilities for the presence of the respective lesion with increasingly dense dot patterns, wherein the lowest density corresponds to uniform white and the highest density corresponds to uniform black. Instead of increasingly dense dot patterns, also increasingly dark shades of grey could have been used, which would have resulted in grey-level versions of the lesion probability maps 20, 21, 22, 23, 24. For the sake of completeness, it should also be noted that lesion probability maps determined based on volumetric medical images will typically also be volumetric themselves. Accordingly, also Fig. 2, for instance, just shows a two-dimensional slice through an actual, volumetric lesion probability map 20.

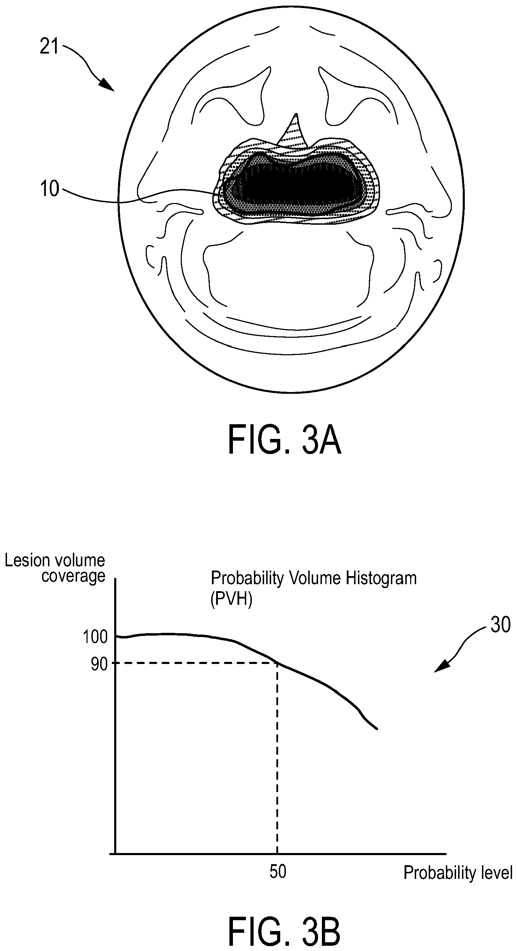

Fig. 3A shows schematically and exemplarily a lesion probability map 21 including a lesion delineation 10. Apart from the lesion delineation 10, the lesion probability map 21 corresponds to the lesion probability map 20 shown in Fig. 2. Hence, Fig. 3A could also be regarded as showing schematically and exemplarily the lesion delineation 10 as an overlay on the lesion probability map 20. The lesion delineation 10 could be included in the lesion probability map 21, i.e. overlaid on the lesion probability map 20, in the shown manner by virtue of the fact that both the delineation and the lesion probability map refer to the same anatomical region, which is in this case the nasopharynx region and its anatomical environment. Usually, the delineation 10 would be provided in terms of image coordinates of a medical image of the anatomical region based on which also the lesion probability map is provided. However, the delineation 10 may, in principle, also be provided in terms of different coordinates and subsequently mapped into the coordinate system of the lesion probability map. In fact, any form of registration between the delineation 10 of the assumed lesion and the lesion probability map 20, 21 may be used.

From Fig. 3A it can be seen that the assumption about the location and extent or shape of the lesion as expressed by the delineation 10 largely corresponds to the probabilistic output of the machine learning model as expressed in terms of the lesion probability map. However, the correspondence is of course not exact. That is to say, even if it were tried to extract a definite indication about the location and the extent or shape of the lesion from the lesion probability map by, for instance, setting a probability threshold above which points would be considered to correspond to points of the lesion while points having probabilities assigned to them below the threshold would be considered points not belonging to the lesion, no choice of the threshold would result in a determined location and extent or shape of the lesion as indicated by the delineation 10. In other words, if the lesion probability map were transformed into a contour plot whose contours correspond to the iso-probability levels of the lesion probability map, none of the contours would exactly match the delineation 10. This deviation of the assumed lesion, as expressed in the delineation 10, from the probabilistically determined lesion, as following from the lesion probability map, can be characterized by a delineation characteristic as referred to herein.

Fig. 3B shows schematically and exemplarily a delineation characteristic 30 determined for the delineation 10 shown in Fig. 3A. The delineation characteristic 30 is a continuous plot of the coverage degrees determined for different probability levels, wherein the coverage degrees are indicated on the vertical axis in terms of a relative volume of the assumed lesion (the values on the vertical axis are given in percent, i.e. %) and the probability levels are given on the horizontal axis (also in percent, i.e. %). While not explicitly indicated in Fig. 3B, the horizontal axis starts at 0%, where it meets the vertical axis and from where it runs towards 100% to the right.

As indicated by the delineation characteristic 30, a region in the lesion probability map 21 bounded by lesion probabilities of 0% and therefore including all possible lesion probabilities, i.e. the 0%-lesion probability level-bounded region, also covers 100% of the assumed lesion region. With increasing lesion probabilities, the associated probability level-bounded regions of the lesion probability map 21 cover less and less of the assumed lesion region. For instance, as indicated in particular in Fig. 3B, a region of the lesion probability map 21 bounded by a lesion probability of 50%, therefore including only all lesion probabilities above 50%, covers only 90% of the assumed lesion region. For the purpose of clarification, it is noted that the delineation 10 and the delineation characteristic 30 do not correspond to a real medical case. The delineation 10 may therefore not be in accordance with clinical guidelines and may therefore not have been provided by a clinician in real clinical practice, such that also the delineation characteristic 30 would be different. Nevertheless, Figs. 3A and 3B illustrate how realistic delineations characteristics can be determined, since the manner in which they are determined does not depend on whether the underlying delineation 10 is realistic or not.

As already described before, the assumed lesion region corresponds to the region bounded by the delineation 10. This region is a sub-region, i.e. a part, of the anatomical region covered by the probability map 21, and can be determined by the delineation characteristic determining unit 103 based on the delineation 10. For determining the individual values of the delineation characteristic 30, the delineation characteristic 30 is configured to determine overlap regions between the assumed lesion region and the probability level-bounded regions and their respective sizes relative to the assumed lesion region as a whole. The overlap regions may be determined in the probability map 21, i.e. based on the delineation 10 represented and the probability level-bounded regions identified therein. Alternatively, the overlap regions may be determined in a medical image in which the delineation 10 has been provided, or even in yet a different digital representation of the anatomical region. In this latter case, the probability level-bounded regions may be mapped from the probability map 21 into the medical image or other digital representation, such as via a registration as indicated above. If the probability map has already been provided based on the image or other representation in which the delineation 10 has been provided, it may already be defined with respect to the same coordinate system as the image or other representation, such that the registration may be trivial.

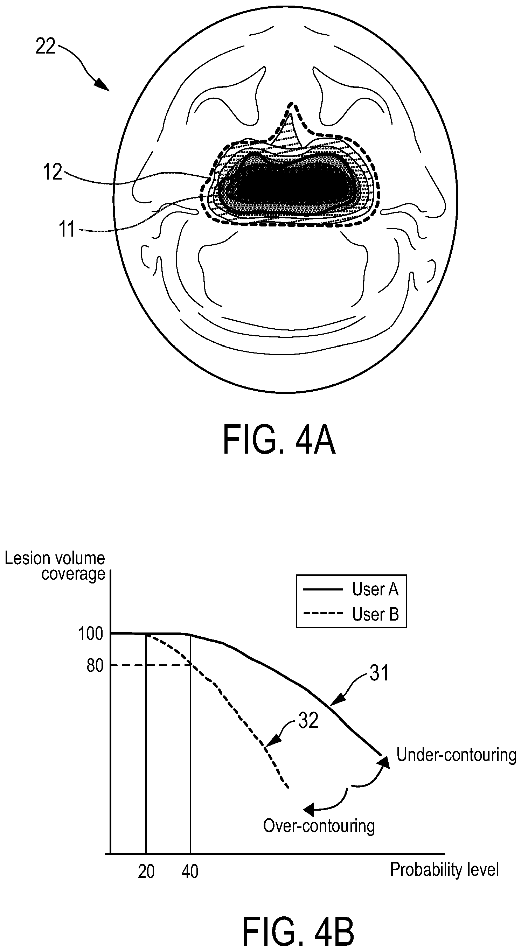

Fig. 4A shows schematically and exemplarily a lesion probability map 22 including a first lesion delineation 11 and a second lesion delineation 12. As in the case of Fig. 3A, the lesion probability map 22 and the delineations 11, 12 may have be provided based on a same medical image of a patient's nasopharynx region. In the case of Fig. 4A, however, the medical image would have been displayed to two different physicians, i.e. a first and a second physician, wherein the first physician has provided an input with respect to the medical image based on which the first delineation 11 has been provided and wherein the second physician has provided an input with respect to the medical image based on which the second delineation 12 has been provided. The lesion probability map 22 may again have been provided based on the medical image by use of a machine learning model as described above. Fig. 4A shows the delineations 11, 12 again in the form of an overlay on the lesion probability map 22, wherein again, for instance, a registration between image coordinates of the medical image and the coordinates of the lesion probability map 22 may have been used to map the delineations 11, 12 from the coordinates in which they have been originally provided with respect to the medical image to the coordinates of the lesion probability map 22. In the illustrated case, the second physician, i.e. the physician based on whose input the delineation 12 has been provided, decided to delineate an extended region of the probability map 22 compared to the first physician, i.e. the physician based on which the first delineation 11 has been provided.

Fig. 4B shows schematically and exemplarily a first delineation characteristic 31 determined for the first delineation 11 and a second delineation characteristic 32 determined for the second delineation 12. The first physician and the second physician are referred to as user A and user B, respectively, in Fig. 4B. The above indicated circumstance that the second physician (user B) has decided to delineate an extended region as compared to the first physician (user A) is reflected in Fig. 4B by the fact that the delineation characteristic 32 is moved away from the delineation characteristic 31 towards the bottom left side, which indicates a faster drop in coverage degrees for increasing probability levels. For example, it is particularly indicated in Fig. 4B that a region bounded by a lesion probability level of 40% still covers 100% of the region delineated by the first physician in terms of delineation 11, but only 80% of the region delineated by the second physician in terms of delineation 12. The delineation 12 reaches a coverage of 100% only at lesion probability levels of 20% and below. This implies that the second physician has the tendency of over-contouring relative to the first physician or that, vice versa, the first physician has the tendency of under-contouring relative to the second physician. Generally, it has been observed that a delineation characteristic loosing coverage faster and/or dropping steeper than others can be an indication of over-contouring. For the purpose of clarification, it is again emphasized that the delineations 11, 12 and the delineation characteristics 31, 32 do not correspond to real medical cases, wherein the illustrated principles apply thereto as well.

While the delineation characteristics 31, 32 are determined for lesion delineations 11, 12 corresponding to the opinions of two different physicians on a same patient, and thus a same lesion, the same comparison mechanism can also be applied to delineations arrived at for different patients. For instance, an average delineation characteristic determined based on all delineations provided by a first physician within a predefined time period may be compared to an average delineation characteristic determined for all delineations provided by a second physician within the predefined time period. While an averaging of the delineations themselves is practically impossible due to the different coordinate systems and anatomies associated with different patients, averaging the delineation characteristics determined for the respective delineations is straightforward. In Fig. 4B, for instance, the delineation characteristic 31 could be replaced by the average delineation characteristic of the first physician, and the delineation characteristic 32 could be replaced by the average delineation characteristic of the second physician. If this would not substantially change Fig. 4B, it could then be inferred that the second physician has on average the tendency of over-contouring relative to the first physician or, vice versa, that the first physician has on average the tendency of under-contouring relative to the second physician, at least as far as the predefined time period over which the averages have been determined is concerned.

The delineations provided by the first and the second physician, based on which the first and the second average delineation characteristic are determined, do not necessarily need to be provided based on medical images of a same patient. The fact that the delineation characteristic is patient-agnostic and also image-agnostic makes such a comparison at a statistical level feasible, without the need of any two users contouring on a same patient. This makes the delineation characteristics considered herein, which could also be referred to as probability volume histogram (PVH) graphs, particularly useful as relative comparison tools. The comparison which they allow for is relative since it does not explicitly indicate on its own whether a given delineation of a lesion is more correct than another delineation of the same or another lesion. It has been realized, however, that such an absolute comparison is also not needed for reducing a variability in lesion delineations.

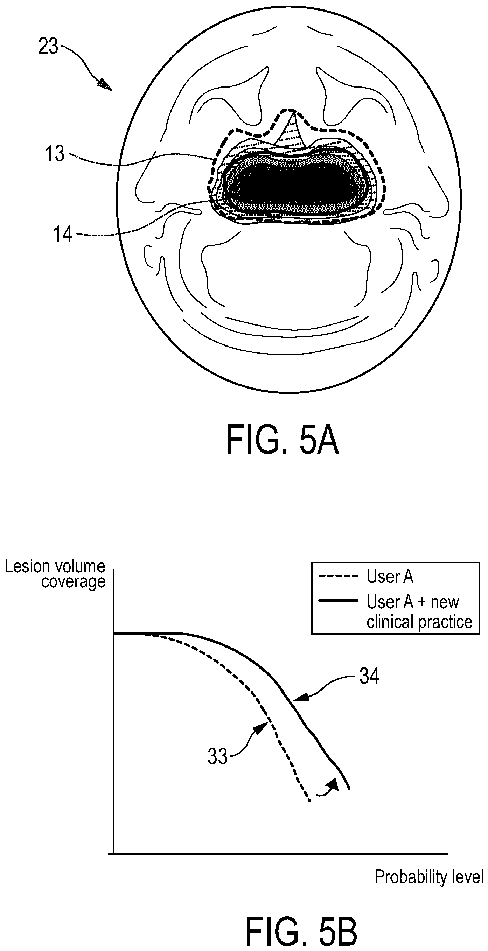

Fig. 5A shows schematically and exemplarily a lesion probability map 23 including a first delineation 13 of an assumed lesion corresponding to a nasopharynx tumor, and a second delineation 14 of the assumed lesion. In this case, the delineation 13 and the delineation 14 have been provided based on an input of a same physician, wherein the first delineation 13 has been provided based on an input of the user before an introduction of a new clinical guideline or practice for delineating lesions, and the second delineation 14 has been provided based on an input of the user after the introduction of the new clinical guideline or practice. By use of respective delineation characteristics, the delineations 13, 14 can be compared with each other even if they do not refer to a same patient or lesion. That is to say, contouring behaviors before and after introductions of new clinical guidelines or practices can be compared to each other across patients.

Fig. 5B shows schematically and exemplarily a delineation characteristic 33 determined for the delineation 13 and a delineation characteristic 34 determined for the delineation 14. Fig. 5B illustrates that the change in clinical guideline or practice has led the user to exhibit the tendency of under-contouring, as inferable by the movement of the delineation characteristic towards the top right. By displaying a plot as shown in Fig. 5B to a user after a change to a clinical practice regarding, for instance, a particular lesion class like nasopharynx tumors, the user can witness an impact of the changed clinical practice on his or her delineation behavior for the respective class of lesions. Regarding Figs. 5A and 5B, it should again be noted that the delineations 13, 14 and corresponding delineation characteristics 33, 34 do not correspond to real medical cases, while the illustrated principles extend thereto as well.

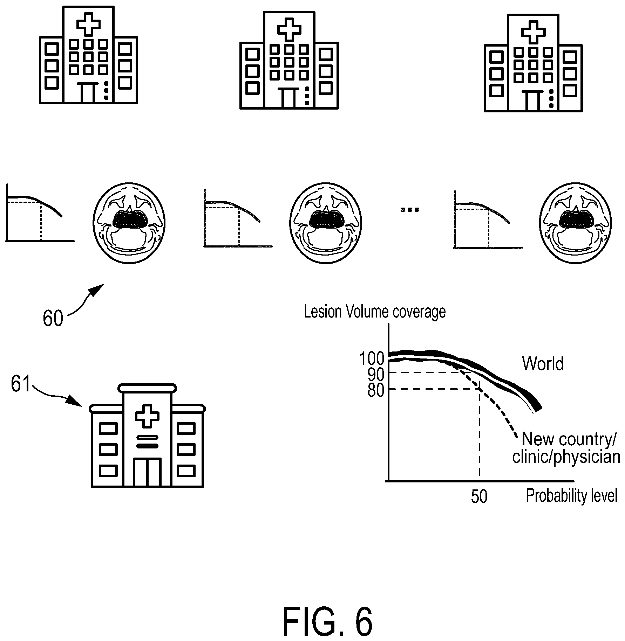

Fig. 6 shows schematically and exemplarily a use of a database 60 of delineation characteristics. The database could be implemented by a storage unit, which may be a central, decentral, localized or distributed storage unit of a computing system. In the illustrated case, delineation characteristics would be determined locally at a plurality of treatment sites, particularly hospitals. At each of the plurality of treatment sites, the delineation characteristics could, for instance, be determined each time a physician provides an input with respect to a medical image of a tumor patient based on which a delineation of the tumor in the medical image is provided. The delineation characteristic corresponding to this delineation could then be determined based on the delineation itself and a lesion probability map determined from the medical image by use of a machine learning model as described further above. The plurality of delineation characteristics determined locally at the plurality of treatment sites may then be uploaded to a central or decentral database. This can be done substantially without security concerns, since the delineation characteristics are patient- and image-agnostic, i.e. since no sensitive information about the respective patient or underlying medical images can be derived therefrom.

The database 60 may be part of a cloud service which may further comprise a backend computing module configured to retrieve the plurality of delineation characteristics from the database and calculate an average delineation characteristic based thereon, along with a respective uncertainty. The uncertainty of the average delineation characteristic may, for instance, correspond to a standard variation. The standard variation may, for instance, be plotted along with the average delineation characteristic for each of the probability levels considered, respectively. In the plot in the bottom right corner of Fig. 6, the white line corresponds to the average delineation characteristic determined based on the delineation characteristic stemming from the plurality of treatment sites, and the thick black line, which could also be considered as an error margin of the white line, corresponds to the uncertainty associated with the average delineation characteristic.

The average delineation characteristic along with its expected uncertainty as illustrated in Fig. 6 by the white line and the thick black line may be accessed from any treatment site, particularly a new treatment site 61 that has so far not been using the cloud service, for instance, and used as a guidance for physicians at the treatment site 61 in delineating lesions, i.e. as a reference in relation to which delineations to be provided and/or currently being provided by the physicians as the treatment site 61 accessing the database may be evaluated. In particular, as illustrated by the dashed line of the plot in the bottom right corner in Fig. 6, a delineation characteristic determined for a delineation currently being provided based on an input of a physician at a new treatment site 61 may be displayed together with the average delineation characteristic and its expected uncertainty. In the example of Fig. 6, the delineation characteristic indicated by the dashed line drops steeper than the average delineation characteristic at around a probability level of 50%, which indicates a potential over-contouring happening at the new treatment site 61 relative to the delineation characteristics in the database 60.

In the use case illustrated by Fig. 6, the plurality of treatment sites, particularly hospitals, may be limited to a single country or may be distributed across more than one country. If the treatment sites from which the plurality of delineation characteristics are stored in the database 60 are initially limited to an initial set of countries, the average delineation characteristic may be used as a reference for one or more physicians from a new country not belonging to the initial set of countries for delineating lesions. The new country may subsequently become part of the set of countries in which treatment sites store delineation characteristics in the database. Instead of a whole new country, also just an additional treatment site, particularly hospital or clinic, may join a set of treatment sites sharing respective delineation characteristics via the database 60 and the backend computing module. Moreover, it may also just be a single physician joining the set of contributors to the database 60 of delineation characteristics.

Besides, instead of comparing the delineation characteristic determined for a current delineation to be provided in a treatment of a patient to an average delineation characteristic retrieved from the database 60 via the backend computing module, a new contributor 61, such as a new country, a new treatment site, or a new physician joining the set of contributors to the delineation characteristics database may also compare a respective average delineation characteristics with the average delineation characteristic from the database. For instance, an average delineation characteristic determined for delineations provided across a new country or across a new treatment site may be compared to an average delineation characteristic determined based on delineation characteristics from a plurality of reference countries and/or a plurality of reference treatment sites. The new contributor may then implement a self-correction delineation scheme in order to align its respective average delineation characteristics with the average delineation characteristic taken as a reference.

An evaluation of a delineation, in terms of its associated delineation characteristic, with respect to the one or more reference delineation characteristics from the database may be carried out by the physician currently providing the delineation to be evaluated him- or herself. He or she may, for instance, previously have been trained to compare delineation characteristics. However, the training does not need to be complex, since a reference delineation characteristic can already serve as a useful delineation assistance if physicians just attempt to achieve a same or similar delineation characteristic with their respective own delineation, such as by trial and error, for instance. Nevertheless, more complex evaluations may be made, in which case they may be carried out automatically by an evaluation unit of the system 100. The evaluation unit may be configured to compare a first delineation characteristic of a first delineation to a second, reference delineation characteristic of one or more second, reference delineations and determine whether the first delineation characteristic is narrow or broad relative to the one or more second reference characteristics and hence corresponds an under- or over-contouring, respectively. Moreover, the evaluation unit may be configured to carry out more detailed evaluations, such as evaluations focused on particular parts of a delineation characteristic, particularly a change in coverage degree at specific probability levels, for instance.

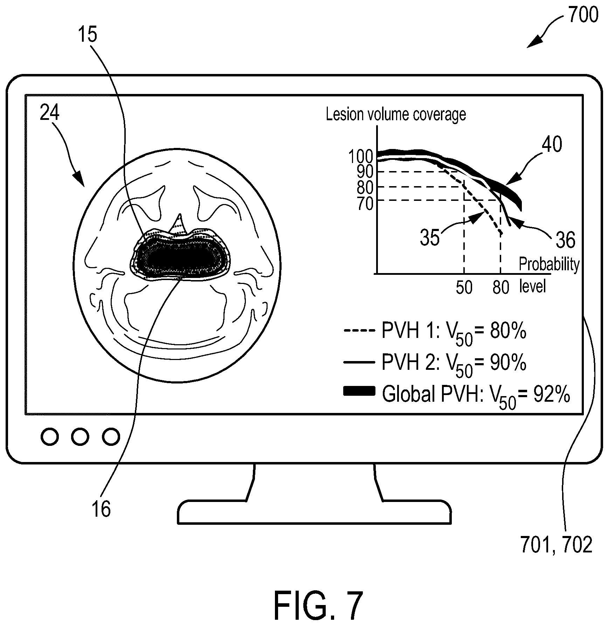

Fig. 7 shows schematically and exemplarily an apparatus 700 for delineating lesions. The apparatus 700 comprises a monitor comprising a touchscreen that is configured to function as a display device 701 for displaying an image of an anatomical region, and at the same time as a delineation device 702 for delineating an assumed lesion in the displayed image of the anatomical region based on an interaction of a user, such as a physician, with the touchscreen of the apparatus 700. The apparatus 700 further comprises the system 100 (not shown in Fig. 7). The delineation characteristic providing unit 103 of the system 100 included in the apparatus 700 is configured to determine a delineation characteristic for the delineation in the image of the anatomical region being displayed. Furthermore, the touchscreen can display the determined delineation characteristic together with a reference delineation characteristic, such as an average delineation characteristic as described above, as a guidance for the user in delineating lesions. Hence, the system 100 may be provided as a data processing unit of an apparatus 700 that assists users like physicians in delineating lesions in medical images by displaying delineation characteristics for currently provided lesion delineations together with reference delineation characteristics. The apparatus 700 may be an integrated imaging modality comprising an imaging device for acquiring medical images of a patient, particularly an anatomical region inside the patient, wherein the acquired medical images may be communicated to the system 100 and the monitor, such that a physician may view the medical image while they, and possibly an input by the physician, such as a delineation indicating input, are processed by the system 100.

In the example of Fig. 7, a left part of the touchscreen shows a lesion probability map 24, which has been determined by use of a machine learning model as described above based on a medical image of a nasopharynx cancer in its anatomical environment. Instead of the lesion probability map 24, also the medical image itself could be displayed by the monitor of the apparatus 700. As an overlay, a delineation 15 of the region assumed to correspond to the nasopharynx cancer is displayed. The delineation 15 may have been provided based on an interaction of a user with the touchscreen.

While the delineation 15 is being provided, i.e. while, for instance, the user interacts with the touchscreen in order to indicate the region which he/she assumes to be the region in the lesion probability map 24 corresponding to the nasopharynx cancer, the system 100 of the apparatus 700 may be configured to determine a delineation characteristic 35 for the delineation 15 being provided. As seen in Fig. 7, the delineation characteristic 35 may be displayed on the monitor of the apparatus 700 side by side with the delineation 15, the latter being displayed as an overlay on the lesion probability map or, in a different case, the medical image itself. The delineation characteristic 35 may be displayed, for instance, as part of a dashboard. Moreover, the delineation characteristic 35 may be displayed together with a reference delineation characteristic, particularly in the form of an average (in this case, global average) delineation characteristic along with its uncertainty 40 as described above with respect to Fig. 6.

The delineation characteristic 35 and the average delineation characteristic 40 may be presented to a user in real-time while he/she provides an input indicating the delineation 15. In this way, a direct feedback is provided to the user at the time of delineation, or contouring, so that he/she can change the delineation/contour accordingly, if desired. In the case shown in Fig. 7, the user has decided to correct the delineation 15 by providing a new delineation 16 which is to replace the delineation 15. Again, the system 100 of the apparatus 700 determines a corresponding delineation characteristic 36, i.e. a new delineation characteristic for the new delineation 16, wherein the new delineation characteristic 36 is displayed together with the previous delineation characteristic 35, which has been determined for the delineation 15, and the average delineation characteristic 40 on the touchscreen. As indicated in Fig. 7, the delineation characteristic 36 is shifted to the top right relative to the delineation characteristic 35, which signals that the second of the two delineation attempts by the user has been more specific than the first attempt. For instance, at a lesion probability level of 50%, the assumed lesion region corresponding to the delineation 15 resulted in a coverage degree of 80%, while the delineation 16 results in a coverage degree of 90%. Specific metrics like these may also be presented to a user on a display, as indicated in Fig. 7. They may be determined by the evaluation unit of the system 100, for instance. By presenting quantitative values about one or more delineation characteristics to a user, the user may judge more accurately whether a currently provided delineation is satisfactory or not.

By displaying the delineation characteristic 35 together with the reference delineation characteristic 40, the user is able to revisit the delineation 15 at particular probability levels of the lesion probability map 24. In this case, he/she has decided to revisit the delineation 15 around the 50% probability level and to confine the delineated region such that the coverage degree at the 50% probability level increases. The delineation characteristic 36 may be determined and displayed in real-time, i.e. while the user is performing corrective actions to the original delineation. However, corrective actions may also be performed by the user in retrospect, i.e. after a delineation has been completed. The delineation characteristic can then assist the user not only in deciding whether the delineation is acceptable or not, but also to identify particular parts of the delineation, i.e. parts corresponding to particular probability levels, in which the delineation could be improved. Hence, an attention of a user assessing an accuracy of a delineation can be efficiently focused to where it is necessary by use of the delineation characteristic.

In the case illustrated by Fig. 7, the corrected delineation 16 leads to a delineation characteristic 36 indicating a coverage degree of 90% at the 50% lesion probability level. This does not exactly correspond to the coverage degree of 92% indicated by the average delineation characteristic 40 taken as a reference for the 50% lesion probability level. However, the difference of 2% does not extend beyond the uncertainty indicated for the average delineation characteristic 40, indicated by the circumstance that the delineation characteristic 36 falls inside the thick black line surrounding the average delineation characteristic 40 at the 50% lesion probability level. Hence, the corrected delineation 16 may be considered to be in line with the consensus expressed by the average delineation characteristic 40. The consensus may be a global consensus. Through corrective actions exemplified by the change from the delineation 15 to the delineation 16 illustrated in Fig. 7, a delineation consensus, possibly around the globe, may be achieved.

Generally, a user interface of a software used by a physician for delineating a lesion in a digital representation of the lesion in its anatomical environment could comprise a dashboard presenting a delineation characteristic corresponding to a delineation provided by the physician. As the physician provides inputs to the software via the user interface that cause the delineation of the lesion, the presented delineation characteristic may be updated, such as in real-time, to provide a feedback to the physician based on which he/she may adapt a currently provided delineation. Moreover, if new delineations are added to a database to which the delineation software has access, the new delineations can be presented together with the currently provided delineation in a medical image of a current patient as well as, in terms of their respective delineation characteristics, together with the delineation characteristic of the currently provided delineation for the current patient in the dashboard of the user interface. New delineations may be added to the database by the physician currently interacting with the user interface or by other physicians, which may be located at other treatment sites and provide the delineations via further instances of the same delineation software, wherein the several instances of the software may communicate with each other via the cloud, for instance. In a local setup, i.e. with only delineations and delineation characteristics of one or more physicians at a same treatment site, possibly provided even via a same apparatus at the treatment site, the database may correspond to a local storage, such as a memory of the apparatus. Through a dashboard of this kind, delineation characteristics of currently provided delineations can be compared to global delineation characteristics, wherein the global delineation characteristics may be determined based on delineations provided in the same hospital as the currently provided delineation and/or based on delineations provided in other hospitals, which may be distributed around the globe, and wherein the delineation characteristics corresponding to the delineations from other hospitals may be downloaded via a cloud service. The downloaded delineation characteristics that are used for the comparison may also be viewed as reference delineation characteristics, and can be considered as establishing criteria that need to be reached for a delineation currently to be provided. In the example of Fig. 7, the corrective action taken by the physician regarding the currently provided delineation has indeed led to an increased consensus with the global average delineation characteristic, as indicated by the coverage degree at the 50% lesion probability level increasing from 80% to 90% and hence approaching the global average of 92%. Dashboards of the described kind can be expected to create a circular feedback process that will naturally guide physicians to seek consensus, locally or globally, with their peers, and eventually reduce the interobserver variability of lesion delineations.

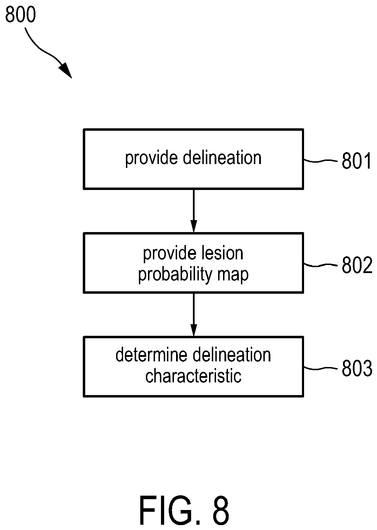

Fig. 8 shows schematically and exemplarily a method 800 for characterizing lesion delineations. In a first step 801 of the method 800, a delineation of an assumed lesion in an anatomical region is provided. The delineation can be, for instance, any of the delineations 10, 11, 12, 13, 14, 15, 16 illustrated in the previous figures. In a second step 802 of the method 800, a lesion probability map is provided that indicates probabilities for a presence of a lesion at points of the anatomical region. The lesion probability map can be, for instance, any of the lesion probability maps 20, 21, 22, 23, 24 illustrated in the previous figures. In a third step 803 of the method 800, a delineation characteristic is determined based on the delineation provided in step 801 and the lesion probability map provided in step 802. The delineation characteristic can be, for instance, any of the delineation characteristics 30, 31, 32, 33, 34, 35, 36 illustrated in the previous figures. The step 803 can be split into a first part in which, for each of a plurality of probability levels of the lesion probability map, a probability level-bounded region is determined, wherein the probability level-bounded regions correspond to parts of the anatomical region bounded by points at the respective probability levels. In the second part of the step 803, the delineation characteristic is determined based on the delineation of the assumed lesion and the plurality of probability level-bounded regions such that the delineation characteristic indicates a coverage degree for each of the probability levels, wherein the coverage degree is a degree to which the probability level-bounded region determined for the respective probability level covers the assumed lesion.

Although a particular use of the delineation characteristics may be seen in providing a tool to physicians allowing them to monitor their contouring behavior and compare it to that of their colleagues, delineation characteristics of the kind described herein may also be used for characterizing automatically determined delineations of lesions. In other words, the delineation provided by the delineation providing unit 101, or provided in the step 801 of the method 800, may be a delineation determined automatically, such as based on a segmentation algorithm applied to a medical image of the lesion to be delineated in its anatomical neighborhood.

As already mentioned before, the delineation characteristics could be viewed as mapping delineations to a patient-agnostic data space. This can be achieved by usage of the lesion probability maps. The delineation characteristics can be understood as a new type of graph indicating probabilistic volume coverages, such that they may also be referred to as probability volume histograms (PVH). Delineation characteristics can be used to evaluate if a particular physician is over-contouring or under-contouring compared to other expert colleagues working in the same clinic, for instance, and/or may be collected within a population of physicians to extract delineation criteria. Such criteria, which may be defined globally, can be used by physicians seeking for more consensus with their colleagues to guide their contouring/delineation behavior. In such a way, resource-heavy attempts to solve the problem of lesion delineation variability according to which multiple physicians are needed to delineate a lesion on a same patient to facilitate a comparison can be avoided. In addition, problems related to a sharing of sensitive medical data can be resolved, since the delineation characteristics may be kept patient-agnostic and thus shared freely. Notably, physicians may not only compare their delineation behavior to that of others, but also to their own delineation behavior in the past, such as by comparing their own delineation behavior before an introduction of a new technology, such as an imaging technology, or other clinical practice, such as guidelines for delineating lesions, to their own delineation behavior after the introduction of the new technology or clinical practice. For example, the introduction of a better image modality, such as magnetic resonance imaging (MRI) could be expected to reduce an over-contouring of prostate tumors, i.e. a general tendency among physicians to delineate prostate tumors too broadly, such that in a subsequent radiation or ablation treatment of the tumor also healthy tissue may be targeted. By comparing delineation characteristics before and after the introduction of the image modality which is expected to be better, it can be evaluated if this expectation was indeed justified. In this way, hypotheses about any new technology possibly affecting delineation behaviors may be validated. A new imaging technology, for instance, is not necessarily a whole new image modality, but can also be a new imaging, or scanning, sequence for an existing imaging modality. The evaluation of new technologies affecting lesion delineations can be a critical point for the introduction of the new technologies in new clinical areas. For instance, being able to evaluate whether a new magnetic resonance (MR) or spectral computed tomography (CT) modality or sequence can potentially reduce interobserver variations in lesion delineations by differentiating healthy tissue from tumor tissue more accurately can be critical in deciding whether the new image modality or sequence should be used in radiation therapy.

In a particular embodiment, a medical image scan acquired by an image modality used for tumor delineation purposes in oncology applications may first be provided by the system 100. The image modality may, for instance, refer to CT, MRI or positron emission tomography (PET). The delineation provided by the delineation providing unit 101 of the system 100 may then refer to a delineation of a tumor generated by a user, such as an expert physician, on the medical image modality used for the respective oncology application. The system 100 may be communicatively coupled to a database containing historical patient image data acquired with the image modality used by the user for delineating a given tumor, and furthermore delineations of tumors in the historical patient image data. The lesion probability map providing unit 102 may be configured to train a machine learning, particularly deep learning, model on the historical patient image data and the tumor contours in the database such that the trained model can generate probabilistic maps, i.e. lesion probability maps given a new patient image scan. Known deep learning techniques allow for a calculation of such probabilistic tumor maps given historical data have been referenced further above. In a lesion probability map as understood herein, voxels of an image may be assigned a probability value p: [0, 1] reflecting how likely the voxel can be considered a tumor or healthy tissue. While models for generating lesion probability maps do exist, i.e. in an already trained form such that they are ready to be used, it may of course also be possible that new models are found and/or trained that may subsequently be used. It may be assumed that lesion probability maps will mostly relate to the interobserver variability in lesion delineations, which has been found to be a major uncertainty in lesion delineations. While other uncertainties, such as uncertainties related to model parameters of the model used for generating the lesion probability maps, may also influence the probability values indicated by the lesion probability map, their impact can be considered rather insignificant if a large enough data set is used during training of the model.

The delineation characteristic determining unit 103 may be configured to determine a delineation characteristic, or probability volume histogram (PVH), based on a combination of a lesion probability map and a, possibly physician-specific, delineation of a lesion. Given a tumor delineation and a lesion, i.e. tumor, probability map generated on a patient image, the delineation characteristic may be constructed by first splitting the probability map into iso-probability zones or bins (e.g., probabilities pr = 10%, 20% etc.). Each of the iso-probability zones may be defined by all the voxels that share the respective same tumor probability (e.g. 10%). In order to construct a delineation characteristic, which may assume the form of a graph, a total volume that is encapsulated by each iso-probability bin, or zone, may be measured by the delineation characteristic determining unit 103. It should be understood that, even if the iso-probability zones themselves may have a non-zero width and hence have the form of (preferably relatively thin) shells, the volume "encapsulated" by them does not refer to the volume of the shells, but instead to the volume on an interior side of the shells, which is separated by the shells from an exterior volume surrounding the shells. In above Fig. 3B, for instance, the vertical axis would then show the relative total volume encapsulated by an iso-probability bin or zone, wherein the respective iso-probability zones are indicated by the horizontal axis. In Fig. 3B, the dashed line indicates, for instance, that 90% of the tumor volume is encapsulated by the 50% iso-probability zone. Lower iso-probability zones (corresponding to probabilities pr = 10%, 20%, for example) will in general have higher volume coverages (for example, of vol = 100% and 90%, respectively), while as one moves into higher iso-probability zones, the tumor volume that is enclosed, i.e. encapsulated, can be expected to drop. Delineation characteristics of this kind may therefore be expected to regularly move from the "top left" to the "bottom right" when plotted as shown exemplarily and schematically in Fig. 3B. Such delineation characteristics may also be referred to as being cumulative, i.e. as cumulative probability volume histograms. This is because volumes covered by higher iso-probability zones can be expected to generally also be covered by lower iso-probability zones, such that these volumes may be counted both for the higher iso-probability zones as well as for the lower iso-probability zones in determining the delineation characteristic. The covered, i.e. encapsulated, tumor volumes can insofar be regarded as accumulating from higher iso-probability zones towards lower iso-probability zones.

Due to their confidential nature, patient data are typically stored locally in a patient database. The patient data usually comprise medical images, and may also comprise delineations of lesions in the medical images and lesion probability maps generated based on the medical images. Now, besides the patient database, a delineation characteristics database may be established locally at a treatment site along with the patient database or remotely, such as in the cloud. Also a delineation characteristics database located partially locally and partially remotely may be realized. For communication between the patient database and the delineation characteristics database, a computing module, particularly a backend computing module, may be provided that is configured to retrieve medical images, delineations and lesion probability maps from the patient database, calculate one or more values of, particularly complete, delineation characteristics based thereon and store the one or more values or the complete delineation characteristics in the delineation characteristics database. It should be noted that, while it may be more secure to have the patient database located locally, such as at a particular treatment site, the patient database may also be located at least partially remotely and/or in the cloud.

Accordingly, a cloud platform is envisaged which may be accessible from around the globe and where delineation characteristics data can be uploaded/downloaded. For instance, the delineation characteristics data may be uploaded/downloaded from multiple hospitals around the globe. The cloud platform may be accessed via a web application service that allows a user to log in and visualize the delineation characteristics data, particularly complete delineation characteristics that have been uploaded to the cloud platform. Furthermore, a backend computing module may be provided that is configured to retrieve, for every new medical image of a patient loaded and each new delineation provided with respect to the image, in real-time the medical image and the delineation and generate a lesion probability map for the medical image, as well as possibly also the delineation characteristic corresponding to the delineation. The backend module may be the above-mentioned one for communicating between the patient database and the delineation characteristics database.

As further described above with respect to Fig. 7, a front end may be provided that is configured to retrieve for each lesion, patient or general structure selected by a physician, corresponding delineation characteristics data from the delineation characteristics database and present it as a visualization feedback to the physician in order to assist him/her in providing a lesion delineation. The visualization may be realized in terms of a dashboard of a computer screen. Additionally, global delineation characteristics data or other metrics relating thereto may be downloaded from the cloud platform and visualized. This may further assist the physician.

Delineation characteristics as described herein may be used by a physician to monitor how the delineation for which the delineation characteristic is determined relates to the lesion probability map, which may be regarded as a map of expected probabilities for the presence of a lesion in a respective anatomical region. If the lesion probability map is determined by use of a probabilistic model trained on historical data, the relation between the delineation and the lesion probability map may also be viewed as a relation between the delineation and the historical data that were used for training the probabilistic model. Delineation characteristics can be presented to a physician after he/she has completed a delineation as a feedback visualization, wherein the physician may then decide to change the delineation based on the feedback. Delineation characteristics may, however, also be presented to a physician as he/she works on completing a delineation characteristic may be determined in real-time and built up in the presentation step-by-step as the delineation is being completed by the physician. Delineation characteristics as described herein may be viewed as quantifying delineation behaviors of physicians in a patient- and image-agnostic space, thus relaxing the pain point of needing multiple physicians delineating on a same patient as well as sharing sensitive data, as already indicated above.

Although the above described embodiments related mainly to the case of a single delineation provided, it is also possible that a delineation for each of a plurality of lesions or other tissue structures of interest in the anatomical region is provided. A delineation characteristic may then be provided for each of the delineations, i.e. each of the lesions, for instance. For doing so, the delineation characteristic determining unit may be configured to determine separate coverage degrees for each of the delineated regions, i.e. for each of the assumed lesion regions, for instance, although all coverage degrees may be determined based on a same probability map, and particularly based on a same set of probability levels identified therein.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the providing of a delineation, the providing of a probability map, the determining of the probability level-bounded regions, the determining of the delineation characteristic based on the probability level-bounded regions, et cetera, performed by one or several units or devices can be performed by any other number of units or devices. These procedures can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a system for characterizing delineations of tissue of interest. The system comprises one or more units configured to provide a delineation of assumed tissue of interest in an anatomical region, to provide a probability map indicating probabilities for a presence of tissue of interest at points of the anatomical region, and to a) determine, for each of a plurality of probability levels of the probability map, a probability level-bounded region corresponding to a part of the anatomical region bounded by points at the respective probability level, and b) determine, based on the delineation and the probability level-bounded regions, a delineation characteristic indicating, for each of the probability levels, a degree to which the respective probability level-bounded region covers the assumed tissue of interest. By use of such delineation characteristics for comparing delineations, a variability in delineations may be reduced.

## Claims

1. A system (100) for characterizing delineations of tissue of interest, wherein the system (100) comprises:
- a delineation providing unit (101) configured to provide a delineation (10, 11, 12, 13, 14, 15, 16) of assumed tissue of interest in an anatomical region,
- a probability map providing unit (102) configured to provide a probability map (20, 21, 22, 23, 24) indicating probabilities for a presence of tissue of interest at points of the anatomical region, and
- a delineation characteristic determining unit (103) configured to:
a) determine, for each of a plurality of probability levels of the probability map (20, 21, 22, 23, 24), a probability level-bounded region, the probability level-bounded region corresponding to a part of the anatomical region bounded by points at the respective probability level, and
b) determine, based on the delineation (10, 11, 12, 13, 14, 15, 16) of the assumed tissue of interest and the plurality of probability level-bounded regions, a delineation characteristic (30, 31, 32, 33, 34, 35, 36) indicating a coverage degree for each of the probability levels, the coverage degree being a degree to which the probability level-bounded region determined for the respective probability level covers the assumed tissue of interest.

2. The system (100) as defined in claim 1, wherein the tissue of interest refers to tissue of a lesion or an organ at risk.

3. The system (100) as defined in claim 1 or 2, wherein the delineation characteristic determining unit (103) is configured to a) determine an assumed tissue region of interest based on the provided delineation (10, 11, 12, 13, 14, 15, 16) of the assumed tissue of interest, the assumed tissue region of interest being a part of the anatomical region corresponding to the assumed tissue of interest, and to b) determine the delineation characteristic (30, 31, 32, 33, 34, 35, 36) based on overlaps between the assumed tissue region of interest and the plurality of probability level-bounded regions.

4. The system (100) as defined in claim 3, wherein the delineation (10, 11, 12, 13, 14, 15, 16) of the assumed tissue of interest and the probability map (20, 21, 22, 23, 24) are registered with each other, and wherein the delineation characteristic determining unit (103) is configured to determine the assumed tissue region of interest, the probability level-bounded regions and the overlaps therebetween in the probability map.

5. The system (100) as defined in claim 3, wherein the delineation (10, 11, 12, 13, 14, 15, 16) of the assumed tissue of interest and the probability map (20, 21, 22, 23, 24) are provided based on one or more digital representations of the anatomical region, and wherein the delineation characteristic determining unit (103) is configured to determine the assumed tissue region of interest, the probability level-bounded regions and the overlaps therebetween in one of the one or more digital representations of the anatomical region.

6. The system (100) as defined in claim 5, wherein the one or more digital representations of the anatomical region correspond to one or more medical images of the anatomical region.

7. The system (100) as defined in any of the preceding claims, wherein the delineation characteristic (10, 11, 12, 13, 14, 15, 16) refers to a histogram of the coverage degrees for the plurality of probability levels of the probability map (20, 21, 22, 23, 24).

8. The system (100) as defined in any of the preceding claims, wherein the probability map providing unit (102) is configured to provide the probability map (20, 21, 22, 23, 24) based on a medical image of the anatomical region by use of a machine learning model that has been trained on a training data set of medical images and delineations of tissue of interest therein, to output a probability map (20, 21, 22, 23, 24) for a medical image received as an input, the probability map (20, 21, 22, 23, 24) indicating probabilities for a presence of tissue of interest at points of the anatomical region.

9. The system (100) as defined in any of the preceding claims, further comprising a storage unit configured to store the determined delineation characteristic (30, 31, 32, 33, 34, 35, 36) as a reference delineation characteristic in relation to which further delineation characteristics (30, 31, 32, 33, 34, 35, 36) are to be evaluated.

10. The system (100) as defined in any of the preceding claims, further comprising an evaluation unit configured to evaluate the determined delineation characteristic (30, 31, 32, 33, 34, 35, 36) in relation to one or more reference delineation characteristics (30, 31, 32, 33, 34, 35, 36, 40).

11. The system (100) as defined in claim 10, wherein the evaluation unit is configured to evaluate the determined delineation characteristic (30, 31, 32, 33, 34, 35, 36) based on a comparison to a reference delineation characteristic being an average (40) of a plurality of other reference delineation characteristics (30, 31, 32, 33, 34, 35, 36).

12. The system (100) as defined in claim 10 or 11, wherein the evaluation unit is configured to determine that a) the provided delineation (10, 11, 12, 13, 14, 15, 16) of the assumed tissue of interest is relatively narrow if the determined delineation characteristic (30, 31, 32, 33, 34, 35, 36) indicates a smaller decrease in coverage degree with increasing probability levels than the reference delineation characteristic (30, 31, 32, 33, 34, 35, 36, 40), and that b) the provided delineation (10, 11, 12, 13, 14, 15, 16) of the assumed tissue of interest is relatively broad if the determined delineation characteristic (30, 31, 32, 33, 34, 35, 36) indicates a higher decrease in coverage degree with increasing probability levels than the reference delineation characteristic (30, 31, 32, 33, 34, 35, 36, 40).

13. An apparatus (700) for delineating tissue of interest, wherein the apparatus (700) comprises:
- a display device (701) configured to display an anatomical region,
- a delineation device (702) configured to delineate assumed tissue of interest in the displayed anatomical region, and
- the system (100) as defined in any of the preceding claims, wherein the delineation characteristic providing unit (103) is configured to determine the delineation characteristic (30, 31, 32, 33, 34, 35, 36) for the delineation in the displayed anatomical region,
wherein the display device (701) is further configured to display the determined delineation characteristic (30, 31, 32, 33, 34, 35, 36) together with a reference delineation characteristic (30, 31, 32, 33, 34, 35, 36, 40).

14. A method (800) for characterizing delineations of tissue of interest, wherein the method (800) includes:
- providing (801) a delineation (10, 11, 12, 13, 14, 15, 16) of assumed tissue of interest in an anatomical region,
- providing (802) a probability map (20, 21, 22, 23, 24) indicating probabilities for a presence of tissue of interest at points of the anatomical region, and
- determining (803):
a) for each of a plurality of probability levels of the probability map (20, 21, 22, 23, 24), a probability level-bounded region, the probability level-bounded region corresponding to a part of the anatomical region bounded by points at the respective probability level, and
b) based on the delineation (10, 11, 12, 13, 14, 15, 16) of the assumed tissue of interest and the plurality of probability level-bounded regions, a delineation characteristic (30, 31, 32, 33, 34, 35, 36) indicating a coverage degree for each of the probability levels, the coverage degree being a degree to which the probability level-bounded region determined for the respective probability level covers the assumed tissue of interest.

15. A computer program for characterizing delineations of tissue of interest, wherein the program comprises instructions causing the system (100) as defined in any of claims 1 to 12 to carry out the method (800) as defined in claim 14.
